(19) Europäisches Patentamt
European Patent Office
Office européen des brevets

(11) **EP 4 607 248 A1**

(12) **EUROPEAN PATENT APPLICATION**
published in accordance with Art. 153(4) EPC

(43) Date of publication:
**27.08.2025 Bulletin 2025/35**

(21) Application number: **23910040.7**

(22) Date of filing: **08.12.2023**

(51) International Patent Classification (IPC):
*G01V 1/28* (2006.01)    *G01V 1/30* (2006.01)

(52) Cooperative Patent Classification (CPC):
**G01V 1/28; G01V 1/30; G01V 1/32; G01V 1/36**

(86) International application number:
**PCT/CN2023/137357**

(87) International publication number:
**WO 2024/140110 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 CN 202211675346**

(71) Applicants:
• **China National Petroleum Corporation**
  **Beijing 100007 (CN)**
• **BGP Inc., China National Petroleum Corporation**
  **Hebei 072751 (CN)**
• **CNPC Exploration Software Co., Ltd**
  **Beijing 100080 (CN)**

(72) Inventors:
• **WANG, Lei**
  **Baoding, Hebei 072751 (CN)**
• **LIANG, Jiandong**
  **Baoding, Hebei 072751 (CN)**
• **XUAN, Ruiqing**
  **Baoding, Hebei 072751 (CN)**
• **ZHU, Jinping**
  **Baoding, Hebei 072751 (CN)**
• **CHENG, Dan**
  **Baoding, Hebei 072751 (CN)**
• **SUN, Pengyuan**
  **Baoding, Hebei 072751 (CN)**

(74) Representative: **Petraz, Gilberto Luigi et al**
**GLP S.r.l.**
**Viale Europa Unita, 171**
**33100 Udine (IT)**

(54) **VISCOUS MEDIUM BASED MIGRATION IMAGING METHOD AND DEVICE**

(57) A viscous medium based migration imaging method, relating to the technical field of oil geophysical prospecting, and comprising: determining a total attenuation travel time and a phase compensation function of seismic waves in a viscous medium; constructing an amplitude compensation function related to absorption attenuation; constructing the amplitude compensation function having gain control; determining a new viscous medium compensation function on the basis of the phase compensation function and the amplitude compensation function of the seismic waves in the viscous medium; performing Fourier transform on seismic records of receiver points of the seismic waves in the viscous medium to obtain the seismic record of a frequency domain; performing frequency division compensation on the seismic record of the frequency domain on the basis of the new viscous medium compensation function to obtain seismic data obtained after compensation; and performing pre-stack depth migration processing on said seismic data to obtain a viscous medium based migration imaging profile. Further provided is a viscous medium based migration imaging device. The problem of absorption attenuation compensation of a region having a small Q value can be solved, and the resolution of a seismic imaging profile is improved.

EP 4 607 248 A1

S110
Determining total attenuation time and a phase compensation function of a seismic wave in a viscous medium

S120
Establishing an amplitude compensation function related to absorption attenuation based on the total attenuation time

S130
Adding gain control to the amplitude compensation function to establish an amplitude compensation function having the gain control

S140
Determining a new compensation function of viscous medium based on the phase compensation function of the seismic wave in the viscous medium and the established amplitude compensation function

S150
Performing Fourier transform on a seismic record of a receiver point of the seismic wave in the viscous medium to obtain a seismic record in a frequency domain

S160
Performing frequency division compensation on the seismic record in the frequency domain based on the new compensation function of the viscous medium to obtain compensated seismic data

S170
Performing prestack depth migration on the compensated seismic data to obtain a migration imaging section of the viscous medium

FIG. 2

**Description**

**Field of the Invention**

The disclosure relates to the technical field of geophysical exploration for petroleum, in particular to a method for migration imaging of a viscous medium, an apparatus for migration imaging of a viscous medium, a machine-readable storage medium, and a processor.

**Background of the Invention**

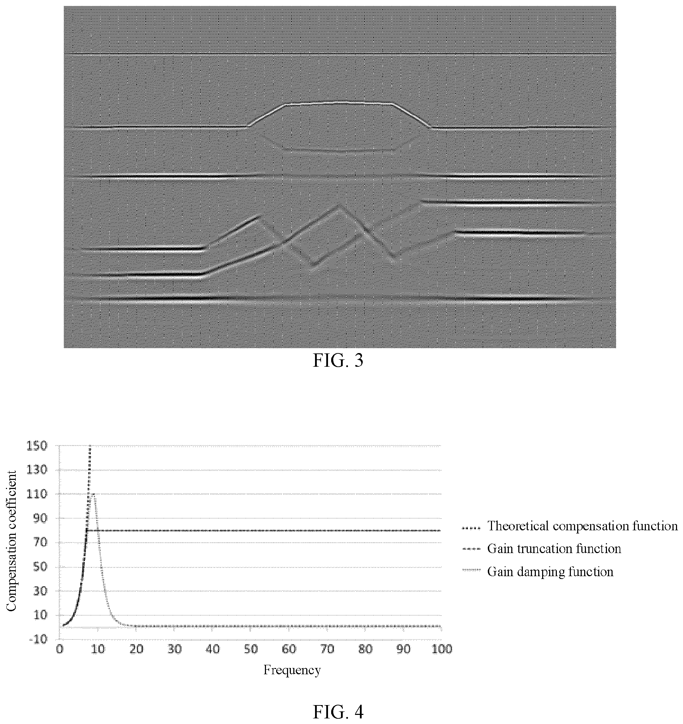

Since underground media are not completely elastic, seismic waves will undergo viscous absorption attenuation when propagating underground, and seismic waves with different frequency components vary in degree of absorption attenuation. As frequencies of the seismic waves increase, the absorption degrees of the seismic waves increase, and resolution and fidelity of a seismic imaging section decrease. This problem is more serious in a gas cloud area. For primary wave exploration commonly used in seismic exploration, the absorption attenuation of primary waves by gas cloud is more serious. After the primary waves pass through the gas cloud area, seismic signals will be severely distorted in amplitude, frequency and phase (shown in FIG. 3). As a result, seismic interpretation, well calibration, amplitude analysis, etc. are influenced considerably. It is of great significance for high-precision seismic exploration if waveform features changed by a viscous medium can be subjected to compensation or restored and the resolution and illumination of the imaging section can be improved before or during imaging. In order to eliminate absorption of the seismic waves by the viscous medium, geophysicists generally use a quality factor Q to measure the degree of absorption attenuation, and develop a set of mature theories of Q compensation for the seismic waves.

However, the traditional Q-migration technology cannot balance the stability and effectiveness of a compensation algorithm for an area with a small Q value such as the gas cloud area, which makes effective compensation for high-frequency components of the seismic signals impossible.

**Summary of the Invention**

An objective of examples of the disclosure is to provide a method and apparatus for migration imaging of a viscous medium, which solve the problem of compensation for absorption attenuation in an area with a small Q value and increase resolution of a seismic imaging section.

In order to achieve the objective described above, a first aspect of the disclosure provides a method for migration imaging of a viscous medium. The method includes:

determining total attenuation time $T^*$ and a phase compensation function of a seismic wave in the viscous medium;
establishing an amplitude compensation function related to absorption attenuation based on the total attenuation time $T^*$;
adding gain control to the amplitude compensation function to establish an amplitude compensation function having the gain control;
determining a new compensation function of the viscous medium based on the phase compensation function of the seismic wave in the viscous medium and the established amplitude compensation function;
performing Fourier transform on a seismic record of a receiver point of the seismic wave in the viscous medium, and obtaining a seismic record in a frequency domain;
performing frequency division compensation on the seismic record in the frequency domain based on the new compensation function of the viscous medium to obtain compensated seismic data; and
performing prestack depth migration on the compensated seismic data to obtain a migration imaging section of the viscous medium.

In an embodiment of the application, the determining total attenuation time $T^*$ of a seismic wave in the viscous medium comprises:

obtaining seismic records in the form of shot gather in a time domain that are conventionally processed;
establishing a velocity model in a depth domain and an absorption attenuation Q model based on the seismic records in the form of shot gather in the time domain;
obtaining, for seismic record of each shot at coordinates of a shot point based on the velocity model in the depth domain and the absorption attenuation Q model, attenuation time $T_s^*$ of the shot point through ray tracing of the shot point considering the absorption attenuation;

obtaining, for each receiver point, attenuation time $T_r^*$ of the receiver point through ray tracing of the receiver point considering the absorption attenuation; and

obtaining the total attenuation time T* by adding the attenuation time $T_s^*$ of the shot point and the attenuation time $T_r^*$ of the receiver point together.

In an embodiment of the application, the determining a phase compensation function of a seismic wave in the viscous medium comprises:

determining the phase compensation function of the seismic wave in the viscous medium according to Formula (3):

$$D_a(x,w) = exp\left[iw(-\frac{i}{2}T^* - \frac{1}{\pi}T^* ln(w/w_0))\right]; \qquad (3)$$

simplifying and expressing Formula (3) as follows:

$$D_a(x,w) = Aexp\left[iwT^p\right]; \qquad (4)$$

$$A = exp\left(\frac{w}{2}T^*\right), \quad T^p = -\frac{1}{\pi}T^* ln(w/w_0); \qquad (5)$$

wherein $D_a(x, w)$ denotes a compensation factor of the seismic wave, $x$ denotes a spatial position, $w$ denotes a circular frequency of the seismic wave, $i$ denotes an imaginary unit, $\pi$ denotes a ratio of circumference to diameter, $w_0$ denotes a reference circular frequency, $T^*$ denotes the total attenuation time, $exp[iwT^p]$ denotes the phase compensation function, A denotes the amplitude compensation function of the seismic wave, and $T^p$ denotes a phase compensation factor of the seismic wave.

In an embodiment of the application, the establishing an amplitude compensation function related to absorption attenuation based on the total attenuation time $T^*$ comprises:

establishing the amplitude compensation function $\{D(i)\}, i = 1,2,...,N$ related to the absorption attenuation based on the total attenuation time $T^*$ according to Formulas (7)-(8):

$$D(1) = 1; \qquad (7)$$

$$D(i+1) = D(i) + exp\left[-((f_{i+1} - f_{ctl})/T_{scl})^2/2\right] \quad i = 1,2,...,N; \qquad (8)$$

wherein $f_{ctl}$ denotes a control frequency, and $f_{i+1}$ denotes a frequency sequence; and $T_{scl} = C_1 * T^*$, wherein $C_1$ denotes a user-controllable scale factor, and $T^*$ denotes the total attenuation time.

In an embodiment of the application, the adding gain control to the amplitude compensation function to establish an amplitude compensation function having the gain control comprises:

determining the gain control as $d_{scl} = db_{in}/C_2$, wherein $C_2$ denotes a user-controllable scale factor, and $db_{in}$ denotes a user-controllable compensation decibel; and
establishing an amplitude absorption compensation function $\{D_{new}(i)\}, i = 1,2,...,N$ for different frequencies according to Formula (9):

$$D_{new}(i) = D(i)^{d_{scl}}, \quad i = 1,2,...,N; \qquad (9)$$

wherein $D_{new}(i)$ denotes the amplitude compensation function having the gain control, D(i) denotes the amplitude compensation function, $d_{scl}$ denotes the gain control, and N denotes a number of frequencies of a seismic signal.

In an embodiment of the application, the determining a new compensation function of the viscous medium based on the phase compensation function of the seismic wave in the viscous medium and the established amplitude compensation function comprises:

determining the new compensation function of the viscous medium based on the phase compensation function of the seismic wave in the viscous medium and the established amplitude compensation function according to Formula (10);

$$\mathrm{D}_b(x, w) = D_{new} \exp[iw T'^P];\qquad (10)$$

wherein $\mathrm{D}_b(x, w)$ denotes the new compensation function of the viscous medium, $D_{new}$ denotes the amplitude compensation function, w denotes the circular frequency of the seismic wave, $i$ denotes the imaginary unit, $exp[iwT^p]$ denotes the phase compensation function, and $T^P$ is computed by Formula (5).

In an embodiment of the application, the performing frequency division compensation on the seismic record in the frequency domain based on the new compensation function of the viscous medium to obtain compensated seismic data comprises:

performing the frequency division compensation on the seismic record in the frequency domain based on the new compensation function of the viscous medium according to Formula (11) to obtain the compensated seismic data;

$$\mathrm{D}_{flt}(x, w) = \mathrm{D}_b(x, w) * \mathrm{D}_{obs}(x, w);\qquad (11)$$

wherein $\mathrm{D}_{flt}(x, w)$ denotes the compensated seismic data, $\mathrm{D}_b(x, w)$ denotes the new compensation function of the viscous medium, and $\mathrm{D}_{obs}(x, w)$ denotes the seismic record in the frequency domain.

A second aspect of the disclosure provides an apparatus for migration imaging of a viscous medium. The apparatus includes:

a first determination module used to determine total attenuation time T* and a phase compensation function of a seismic wave in the viscous medium;
a first establishment module used to establish an amplitude compensation function related to absorption attenuation based on the total attenuation time $T^*$;
a second establishment module used to add gain control to the amplitude compensation function to establish an amplitude compensation function having the gain control;
a second determination module used to determine a new compensation function of the viscous medium based on the phase compensation function of the seismic wave in the viscous medium and the established amplitude compensation function;
a Fourier transform module used to perform Fourier transform on a seismic record of a receiver point of the seismic wave in the viscous medium to obtain a seismic record in a frequency domain;
a frequency division compensation module used to perform frequency division compensation on the seismic record in the frequency domain based on the new compensation function of the viscous medium to obtain compensated seismic data; and a prestack depth migration module used to perform prestack depth migration on the compensated seismic data to obtain a migration imaging section of the viscous medium. A third aspect of the disclosure provides a processor. The processor is configured to execute the method for migration imaging of a viscous medium described above.

A fourth aspect of the disclosure provides a machine-readable storage medium. The machine-readable storage medium stores instructions, where the instructions cause a processor to be configured to execute the method for migration imaging of a viscous medium described above when executed by the processor.
Compared with the prior art, the technical solution of the disclosure has the following beneficial effects: according to the method and apparatus for migration imaging of a viscous medium provided by the disclosure, the method uses a new Q compensation function effectively conforming to an absorption attenuation principle, and a new method for migration imaging of a viscous medium is formed, thus effectively solving the problem of compensation for the absorption attenuation in the area with the small Q value. This method is simple and practical, and can effectively compensate for a high-frequency component of the seismic wave. After compensation, a main frequency of the seismic imaging section is increased by 4 Hz or more, and stability and effectiveness of a compensation algorithm for the area with the small Q value such as a gas cloud area are balanced.

Other features and advantages of the examples of the disclosure will be described in detail in the following specific embodiments.

**Brief Description of Drawings**

The accompanying drawings are used for providing further understanding of the examples of the disclosure as a constituent part of the description, serve to explain the examples of the disclosure together with following specific embodiments, but do not constitute limitation to the examples of the disclosure. In the figures:

The accompanying drawings are used for providing further understanding of the examples of the disclosure as a constituent part of the description, serve to explain the examples of the disclosure together with following specific embodiments, but do not constitute limitation to the examples of the disclosure. In the figures:

FIG. 1 illustratively shows a schematic diagram of an application environment of a method for migration imaging of a viscous medium according to an example of the disclosure;

FIG. 2 illustratively shows a schematic flowchart of a method for migration imaging of a viscous medium according to an example of the disclosure;

FIG. 3 illustratively shows a primary wave depth migration imaging section having a gas cloud area;

FIG. 4 illustratively shows a comparison diagram of compensation functions obtained by several compensation algorithms in the prior art when Q=10;

FIG. 5 illustratively shows a diagram of a conventional migration imaging section in the prior art;

FIG. 6 illustratively shows a diagram of a gain truncation compensated Q-migration imaging section in the prior art;

FIG. 7 illustratively shows a spectrum comparison diagram of a gain truncation compensated Q-migration imaging section and a conventional migration imaging section in the prior art;

FIG. 8 illustratively shows a diagram of a gain damping compensated Q-migration imaging section in the prior art;

FIG. 9 illustratively shows a spectrum comparison diagram of a gain damping compensated Q-migration imaging section and a conventional migration imaging section in the prior art;

FIG. 10 illustratively shows a comparison diagram of compensation functions obtained by several compensation algorithms in the prior art when Q=10 and a new compensation function according to an example of the disclosure;

FIG. 11 illustratively shows a diagram of a compensation Q-migration imaging section according to an example of the disclosure;

FIG. 12 illustratively shows a spectrum comparison diagram of compensation Q-migration imaging sections according to an example of the disclosure;

FIG. 13 illustratively shows a structural block diagram of an apparatus for migration imaging of a viscous medium according to an example of the disclosure; and

FIG. 14 illustratively shows an internal structure diagram of a computer device according to an example of the disclosure.

**Detailed Description of the Embodiments**

According to early methods for treating absorption attenuation, influence of the absorption attenuation on seismic data is eliminated through an inverse Q filter. Later, some researchers put forward a generalized method for estimating an energy loss in a wave propagation process. For data after depth migration, this method is used for computing an absorption effect through ray tracing based on an absorption Q model, and implementing corresponding energy compensation for output data of the depth migration. In most cases, this compensation method based on the data after the depth migration is effective. However, energy attenuation of a seismic signal in a process of propagation through an underground medium is related to a frequency. Thus, a more accurate method is to implement frequency division Q compensation in a migration process (this process is viscous medium migration imaging, hereinafter referred to as Q-migration).

Firstly, a suitable Q model is obtained through inversion by a three-dimensional Q inversion algorithm, and then attenuation compensation in the migration process is implemented based on this Q model and a prestack depth migration algorithm. In a viscoelastic medium, time of a seismic wave propagation is expressed as follows:

$$T_c(x,w) = T_0(x) - \frac{1}{2}iT^*(x) - \frac{1}{\pi}T^*(x)\ln(w/w_0); \qquad (1)$$

In the formula, x denotes a spatial position, $w$ denotes a circular frequency of the seismic wave, $T_0(x)$ denotes time of a seismic wave in a conventional elastic medium, $i$ denotes an imaginary unit, $\pi$ denotes a ratio of circumference to

diameter, and $w_0$ denotes a reference circular frequency, and is generally specified by a user. Generally, T* is referred to as attenuation time, an integral formula of the attenuation time along a propagation path of the seismic wave is as follows:

$$T^* = \int (1/Qv)ds \; ; \qquad\qquad (2)$$

In the formula, $v$, $s$ denote a velocity of the medium and the propagation path of the seismic wave respectively, and $Q$ denotes the foregoing Q model.

A time computation formula of seismic waves with different frequencies propagating in the viscous medium is given in the Formula (1). A compensation factor of the seismic wave in the viscous medium may be expressed as follows:

$$D_a(x,w) = \exp[iw(-\frac{i}{2}T^* - \frac{1}{\pi}T^* \ln(w/w_0))] \; ; \qquad\qquad (3)$$

After simple simplification, the formula is expressed as follows:

$$D_a(x,w) = A\exp[iwT^p]; \qquad\qquad (4)$$

$$A = \exp(\frac{w}{2}T^*), \; T^p = -\frac{1}{\pi}T^* \ln(w/w_0); \qquad\qquad (5)$$

With a compensation operator (4), in theory, a researcher may implement target compensation for the seismic signal in a prestack depth migration process, so as to implement Q migration.

In an actual application process, it can be known from analysis of Formula (4) that $T^p$ mainly determines an imaging phase, and a main factor determining an amplitude compensation coefficient is $A$. An expression of $A$ is an exponential function. In a gas cloud area, a Q value is generally small (a minimum may reach about 10), the attenuation time $T^*$ computed by Formula (2) is large in this case, and $A$ obtained by plugging the large attenuation time into Formula (5) is often easy to diverge in a high-frequency area. In order to solve the divergence problem, scholars put forward successively some ideas later to keep the compensation algorithm stable. A main idea is gain control, and implements a truncation limit or a damping limit on the compensation coefficient. These limits can get a desirable compensation effect when the Q value is not small, but cannot fundamentally solve the compensation problem in the gas cloud area (with the small Q value).

As shown in FIG. 3, FIG. 3 illustratively shows a primary wave depth migration imaging section having a gas cloud area. A hexagonal area in the figure is a simulated gas cloud area, and the Q value of this area is about equal to 10, and is very low. It can be seen from the seismic section that energy, a frequency and a phase of a wavelet are obviously distorted after a primary wave passes through the gas cloud area.

As shown in FIG. 4, FIG. 4 shows compensation function curves obtained by several compensation algorithms in the prior art when Q=10. A theoretical compensation curve is expressed with large dots, a gain truncation function is expressed with piecewise lines, and a damping limit function is expressed with small dots. A horizontal axis of FIG. 4 denotes a seismic frequency, and a vertical axis denotes the compensation coefficient. When the Q value is small, the theoretical compensation function increases "explosively" along with an increase of the frequency. A compensation coefficient of the gain truncation function is constant for seismic signals greater than 10 Hz. A compensation coefficient of the gain damping function at a high frequency end is suppressed. It can be seen from FIG. 4 that in a case that the frequency does not exceed 10 Hz, the theoretical compensation function diverges, and the gain truncation function and the damping function effectively control the compensation coefficient. But, it can be seen that the compensation coefficient of the gain truncation function is constant for seismic signals greater than 10 Hz, and the compensation coefficient of the gain damping function at the high frequency end is suppressed. According to theoretical analysis, a Q absorption attenuation principle is that attenuation becomes serious at a high frequency. Thus, as the frequency increases, and the compensation coefficient of the compensation function should gradually increase. But at present, it seems that current technical means cannot achieve such an effect described above.

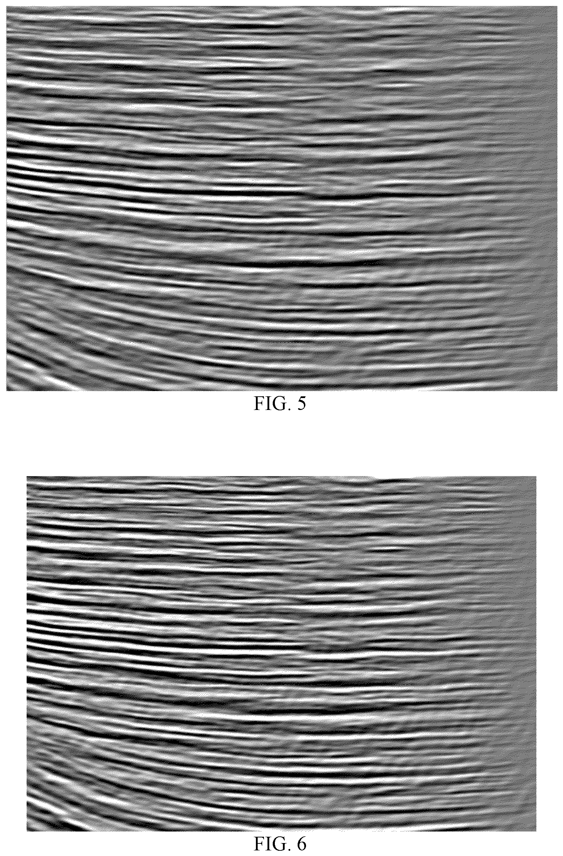

As shown in FIG. 5, FIG. 5 shows a migration imaging section obtained through conventional migration. It can be seen that the resolution of the seismic section is not high due to the absorption attenuation.

As shown in FIG. 6, FIG. 6 shows a gain truncation compensated Q-migration imaging section. In conjunction with FIG. 4, when Q=10, the compensation coefficient of the gain truncation compensated function is constant for seismic signals greater than 10 Hz. Through comparison with FIG. 5, it can be seen that effective compensation for a data band of the gain truncation compensated Q-compensation section is not achieved.

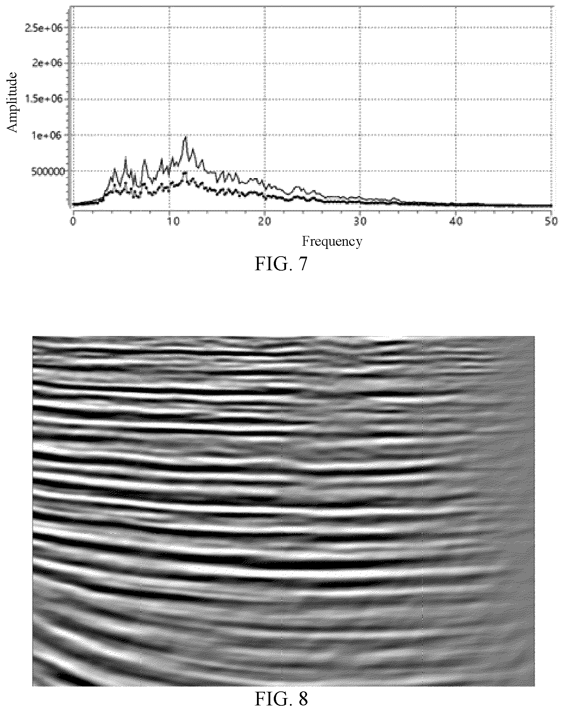

As shown in FIG. 7, FIG. 7 shows a spectrum comparison diagram of a gain truncation compensated Q-migration imaging section and a conventional migration imaging section. In the figure, a thick dot line denotes the spectrum analysis diagram of the conventional migration imaging section of FIG. 5, and a thin line denotes the spectrum analysis diagram of the gain truncation compensated Q-migration imaging section of FIG. 6. It is proved that the data spectrum of the gain truncation compensated Q-migration imaging section is merely improved wholly on the basis of the conventional spectrum, and effective compensation for the high frequency is not achieved.

As shown in FIG. 8, FIG. 8 shows a gain damping compensated Q-migration imaging section. In conjunction with FIG. 4, when Q=10, the compensation coefficient of the gain damping function at the high frequency end is suppressed. Through comparison with FIG. 5, it can be seen that effective compensation for a data frequency of the gain damping compensated Q-compensation section is not achieved, a low frequency is further greatly increased, and a data frequency is reduced instead.

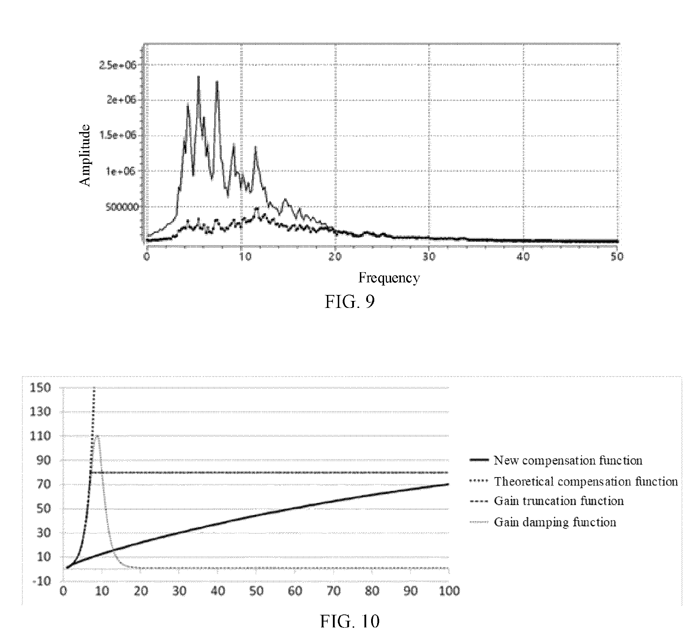

As shown in FIG. 9, FIG. 9 shows a spectrum comparison diagram of a gain damping compensated Q-migration imaging section and a conventional migration imaging section. In the figure, a thick dot line still denotes the spectrum analysis diagram of the conventional migration imaging section of FIG. 5, and a thin line denotes the spectrum analysis diagram of the gain damping compensated Q-migration imaging section of FIG. 8. It can be seen that an amplitude spectrum at a low frequency is further greatly increased, and effective compensation for an amplitude spectrum at a high frequency is not achieved.

The traditional Q-migration technology cannot balance the stability and effectiveness of a compensation algorithm for an area with a small Q value such as the gas cloud area, which makes effective compensation for high-frequency components of the seismic signals impossible. An objective of this example is to design a new Q compensation function effectively conforming to the absorption attenuation principle, and form a new method for migration imaging of a viscous medium for solving the problem of compensation for absorption attenuation in the area with the small Q value and increasing the resolution of the seismic imaging section.

To make the objectives, technical solutions, and advantages of the examples of the disclosure clearer, the technical solutions in the examples of the disclosure will be clearly and completely described with reference to the accompanying drawings in the examples of the disclosure. It should be understood that the specific embodiments described herein are merely used to describe and explain the examples of the disclosure rather than limit the examples of the disclosure. All other examples derived by those skilled in the art from the examples of the disclosure without creative efforts should fall within the protection scope of the disclosure.

It should be noted that if there is description involving "first", "second", etc., in the example of the disclosure, the description of "first", "second", etc. are merely used for describing purposes and cannot be understood as indicating or implying relative importance, or implicitly indicating the number of indicated technical features. Thus, the features defined with "first" and "second" can explicitly or implicitly include at least one of the features. In addition, technical solutions of the examples can be combined with each other on the premise that such a combination can be implemented by a person of ordinary skill in the art, when the combination of technical solutions is contradictory or impossible to implement, it should be considered that such a combination of the technical solutions does not exist and should fall beyond the protection scope required by the disclosure.

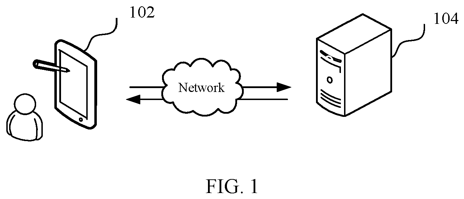

A method for migration imaging of a viscous medium according to the disclosure may be applied to an application environment shown in FIG. 1. A terminal 102 communicates with a server 104 through the network. The terminal 102 may include, but is not limited to, various personal computers, notebook computers, smart phones, portable android devices, and portable wearable devices. The server 104 may be implemented by an independent server or the server cluster composed of a plurality of servers.

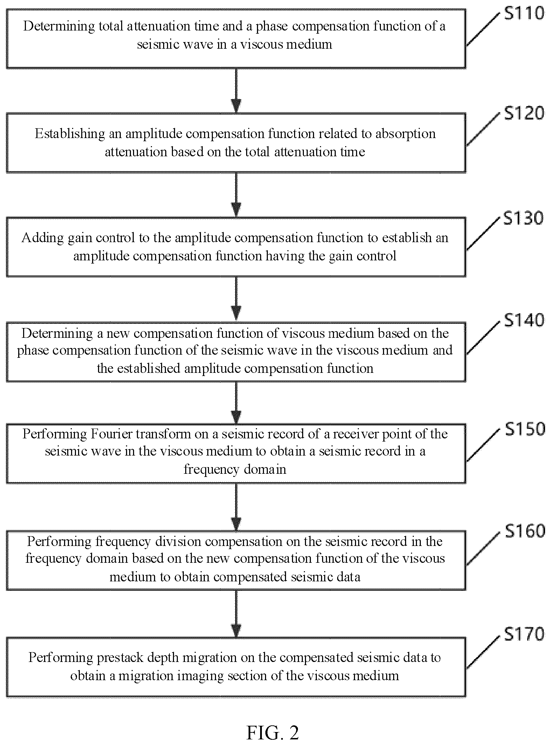

FIG. 2 illustratively shows a schematic flowchart of a method for migration imaging of a viscous medium according to an example of the disclosure. As shown in FIG. 2, in an example of the disclosure, the method for migration imaging of a viscous medium is provided. This example is mainly described with this method applied to the terminal 102 (or the server 104) in the FIG. 1. The method includes Steps S110-S170.

Step S110, determining total attenuation time $T^*$ and a phase compensation function of a seismic wave in the viscous medium.

In the example of the disclosure, a compensation factor of the seismic wave in the viscous medium may be expressed as follows:

$$D_a(x,w) = exp\left[iw\left(-\frac{i}{2}T^* - \frac{1}{\pi}T^*ln(w/w_0)\right)\right]; \qquad (3)$$

After simple simplification, the formula is expressed as follows:

$$D_a(x,w) = Aexp\left[iwT^p\right]; \qquad (4)$$

$$A = exp\left(\frac{w}{2}T^*\right), \quad T^p = -\frac{1}{\pi}T^*ln(w/w_0); \qquad (5)$$

In the formula, $D_a(x, w)$ denotes a compensation factor of the seismic wave, $x$ denotes a spatial position, $w$ denotes a circular frequency of the seismic wave, $i$ denotes an imaginary unit, $\pi$ denotes a ratio of circumference to diameter, $w_0$ denotes a reference circular frequency, $T^*$ denotes the total attenuation time, $exp[iwT^p]$ denotes the phase compensation function, $A$ denotes the amplitude compensation function of the seismic wave, and $T^p$ denotes a phase compensation factor of the seismic wave.

In this example, the total attenuation time $T^*$ may be computed by steps 111-115: Step 111, seismic records in the form of shot gather in a time domain that are conventionally processed are obtained.

In this example, seismic waves are stimulated and recorded, and seismic data collected in the field are processed according to a conventional seismic data processing flow. Theseismic records in the form of shot gather in the time domain that are conventionally processed are obtained.

Step 112, a velocity model in a depth domain and an absorption attenuation Q model are established based on the seismic records in the form of shot gather in the time domain. In this example, the velocity model in the depth domain and the absorption attenuation Q model are established through velocity analysis and tomography inversion on the shot gather seismic record in the time domain.

Step 113, attenuation time $T_s^*$ of the shot point is obtained for seismic record of each shot at coordinates of a shot point based on the velocity model in the depth domain and the absorption attenuation Q model through ray tracing of the shot point considering the absorption attenuation.

In this example, at the coordinates of the shot point, the velocity model in the depth domain and the absorption attenuation Q model obtain in step 112 are used for the ray tracing of the shot point considering the absorption attenuation. The ray tracing may be stepped as the results of solving a partial differential equation with a fourth-order Runge-Kutta method in a grid model:

$$dx / dt = v\sin(a)$$
$$dz / dt = v\cos(a)$$
$$da / dt = -\partial v / \partial x \cos(a) + \partial v / \partial z \sin(a)$$
$$dT^* / dt = 1/Q \qquad ; \qquad (6)$$

In the formula, x and z denote spatial positions of a ray path, t denotes ray time, $v$ denotes a velocity of a velocity model in the depth domain at a position $(x,z)$, $a$ denotes an included angle between a ray and a z axis, $\partial v/\partial x$ and $\partial v/\partial z$ denote partial derivatives of the velocity in a direction $x$ and a direction z respectively, $Q$ denotes a numerical value of the absorption attenuation Q model at the position (x,z), and $T^*$ denotes the attenuation time mentioned in the previous formula (2). Let the attenuation time of the shot point as $T_s^*$.

Step 114, attenuation time $T_r^*$ of the receiver point is obtained for each receiver point through ray tracing of the receiver point considering the absorption attenuation.

In this example, Formula (6) is similarly used for obtaining the attenuation time $T_r^*$ of the receiver point through the ray tracing of the receiver point considering the absorption attenuation.

Step 115, the total attenuation time $T^*$ is obtained by adding the attenuation time $T_s^*$ of the shot point and the attenuation time $T_r^*$ of the receiver point together.

In this example, the total attenuation time $T^* = T_s^* + T_r^*$ is obtained by adding the attenuation time $T_s^*$ of the shot point obtained in step 113 and the attenuation time $T_r^*$ of the receiver point obtained in step 114 together.

Step S120, establishing an amplitude compensation function related to absorption attenuation based on the total attenuation time $T^*$;

In this example, let the control frequency as $f_{ctl}$ (in actual operation, generally 0 may be used). Let $T_{scl} = C_1 * T^*$, in the formula, $C_1$ denotes a user-controllable scale factor (during an actual operation, 1000 may be generally used), and $T^*$ denotes the total attenuation time obtained in step 115. The Fourier transform is performed on a seismic signal of a current receiver point, and it is assumed that an obtained frequency sequence is $\{f(i)\}$, $i = 1,2,..., N$. In the formula, N denotes a frequency number of the seismic signal. The compensation function $\{D(i)\}, i = 1,2,..., N$ related to the absorption attenuation is established according to the following formula:

$$D(1) = 1; \qquad\qquad (7)$$

$$D(i+1) = D(i) + \exp\left[-((f_{i+1} - f_{ctl})/T_{scl})^2 / 2\right] \quad i = 1,2,...,N; \qquad (8)$$

In the formula, $f_{ctl}$ denotes a control frequency, and $f_{i+1}$ denotes a frequency sequence; and $T_{scl} = C_1 * T^*$, in the formula, $C_1$ denotes a user-controllable scale factor, and $T^*$ denotes the total attenuation time.

Step S130, adding gain control to the amplitude compensation function to establish an amplitude compensation function having the gain control.

In this example, let the gain control as $d_{scl} = db_{in}/C_2$. In the formula, $C_2$ denotes a user-controllable scale factor (during an actual operation, 50 may be generally used), and $db_{in}$ denotes a user-controllable compensation decibel. The amplitude absorption compensation function $\{D_{new}(i)\}, i = 1,2,..., N$ is established for different frequencies according to the following formula:

$$D_{new}(i) = D(i)^{d_{scl}}, \quad i = 1,2,...,N; \qquad (9)$$

In the formula, $D_{new}(i)$ denotes the amplitude compensation function having the gain control, $D(i)$ denotes the amplitude compensation function, $d_{scl}$ denotes the gain control, and N denotes a number of frequencies of a seismic signal.

Step S140, determining a new compensation function of the viscous medium based on the phase compensation function of the seismic wave in the viscous medium and the established amplitude compensation function.

In this example, the phase compensation function of the seismic wave in the viscous medium may be obtained by step S110, and the amplitude absorption compensation function for different frequencies may be obtained by step S130. Formula (9) is used to modify Formula (4), and a new Q compensation function may be obtained as follows:

$$D_b(x, w) = D_{new} \exp[iwT^P]; \qquad (10)$$

In the formula, $D_{new}$ is obtained by Formula (9), and $T^P$ is still computed by Formula (5). A diagram of a new compensation function of the viscous medium is shown in FIG. 10.

Step S150, performing Fourier transform on a seismic record of a receiver point of the seismic wave in the viscous medium to obtain a seismic record in a frequency domain. In this example, the Fourier transform is performed on the seismic record of the receiver point, and the seismic record $D_{obs}(x, w)$ in the frequency domain is obtained.

Step S160, performing frequency division compensation on the seismic record in the frequency domain based on the new compensation function of the viscous medium to obtain compensated seismic data.

In this example, the new Q compensation function $D_b(x, w)$ is computed according to the total attenuation time $T^*$ obtained in step 115 and Formulas (7)-(10), and frequency division compensation is performed on the seismic record in the frequency domain:

$$D_{flt}(x, w) = D_b(x, w) * D_{obs}(x, w); \qquad (11)$$

In the formula, $D_{flt}(x, w)$ denotes the compensated seismic data, $D_b(x, w)$ denotes the new Q compensation function, and $D_{obs}(x, w)$ denotes the seismic record in a frequency domain.

Step S170, performing prestack depth migration on the compensated seismic data to obtain a migration imaging section of the viscous medium.

In this example, the compensated seismic data $D_{flt}(x, w)$ obtained in step S160 are used for the prestack depth migration, and the frequency division targeted compensation can be performed on the seismic signal according to the total attenuation time of the signal obtained through the ray tracing in a depth migration process at the receiver point, thus implementing the viscous medium migration imaging at the current receiver point.

In this example, steps 110-170 are used to process seismic records in the form of shot gather in overall time domain obtained, and imaging results are accumulated to obtain a final viscous medium migration imaging section.

FIG. 2 is a schematic flowchart of a method for migration imaging of a viscous medium according to an example. It should be understood that although steps in the flowchart of FIG. 2 are shown in sequence as indicated by arrows, these steps are not necessarily executed in sequence indicated by the arrows. Unless explicitly stated in this text, execution of these steps is not strictly limited in sequence, and these steps can be executed in another sequence. In addition, at least some steps in FIG. 2 may include a plurality of sub-steps or a plurality of stages. These sub-steps or stages are not necessarily executed at the same moment, and may alternatively be executed at different moments. An execution sequence of these sub-steps or stages is not necessarily sequential, and these sub-steps or stages may be executed by turns or alternately with the other steps or at least some sub-steps or stages of the other steps.

As shown in FIG. 10, FIG. 10 shows a comparison diagram of compensation functions obtained by several compensation algorithms in the prior art when Q=10 and a new compensation function (the new Q compensation function in this example) according to an example. As shown in FIG. 10, a horizontal axis denotes the seismic frequency and a vertical axis denotes a compensation coefficient. It can be seen that along with the increase of the frequency, the compensation coefficient of the new Q compensation function increase, which is more in line with the absorption attenuation principle.

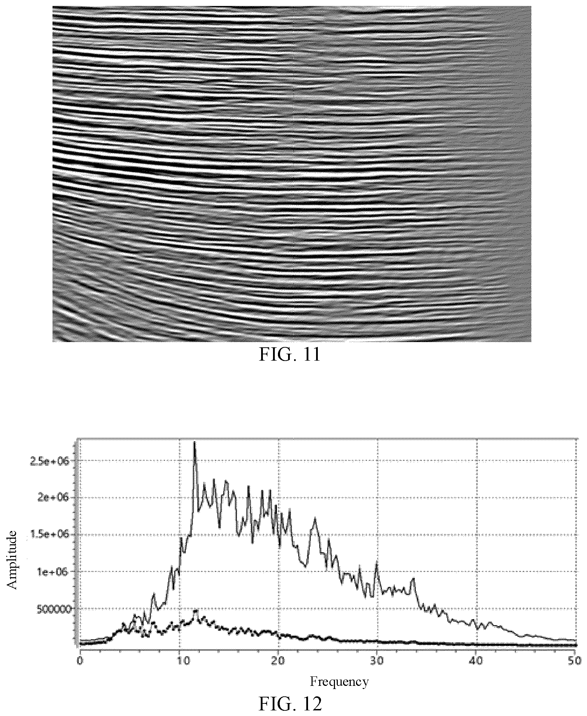

As shown in FIG. 11, FIG. 11 shows a compensated Q-migration imaging section seismic section according to this example. Through comparison with FIG. 5, it can be seen that effective compensation for the data at high frequency of the compensation Q-migration imaging section in this example is achieved, and the resolution is higher. As shown in FIG. 12, FIG. 12 shows a spectrum comparison diagram of a compensated Q-migration seismic section and a conventional migration imaging section according to this example. In the figure, a thick dot line still denotes the spectrum analysis diagram of the conventional migration imaging section of FIG. 5, and a thin line denotes the spectrum analysis diagram of the new Q-migration imaging section of FIG. 11. It can be seen that according to the method of this example, effective compensation for a high-frequency component is achieved, a main frequency of the seismic imaging section after compensation is increased by 4 Hz or more, and the data band is effectively broadened.

The method for migration imaging of a viscous medium described in the example described above will be described below through specific implementation cases. The method includes steps 1-10:

Step 1, seismic waves are stimulated and recorded, seismic data collected in the field are processed according to a conventional seismic data processing flow, and the seismic records in the form of shot gather in the time domain that are conventionally processed are obtained.

Step 2, the seismic records are analyzed, and the velocity model in the depth domain and the absorption attenuation Q model are established through velocity analysis and tomography inversion.

Step 3, the shot gather seismic record obtained in step 1 is input, and steps 4-9 are executed for each shot seismic record.

Step 4, attenuation time $T_s^*$ of the shot point is obtained at coordinates of a shot point based on the velocity model in the depth domain and the absorption attenuation Q model obtain in step 2 through ray tracing of the shot point considering the absorption attenuation with Formula (6).

Step 5, for each receiver point recorded in the shot gather in step 4, the following steps 6-9 are executed.

Step 6, Formula (6) is similarly used for obtaining the attenuation time $T_r^*$ of the receiver point through the ray tracing of the receiver point considering the absorption attenuation. The total attenuation time $T^* = T_s^* + T_r^*$ is obtained by adding the attenuation time in step 4 and the attenuation time in step 5 together.

Step 7, a new compensation function of the viscous medium is established as follows: Firstly, an amplitude compensation function related to the absorption attenuation is established.

A control frequency is expressed as $f_{ctl} = 0$; $T_{scl} = C_1 * T^*$. In the formula, $C_1 = 1000$, $T^*$ denotes the total attenuation time obtained in step 6. The Fourier transform is performed on a seismic signal, and it is assumed that an obtained frequency sequence is $\{f(i)\}, i = 1,2,..., N$. In the formula, N denotes a frequency number of the seismic signal. The compensation function $\{D(i)\}, i = 1,2,...,N$ related to the absorption attenuation is established according to Formulas (7) and (8).

Secondly, gain control is added to the amplitude compensation function.

Let the gain control as $d_{scl} = db_{in}/C_2$, $C_2 = 50$, $db_{in} = 20$ denotes the decibel. The amplitude absorption compensation function $\{D_{new}(i)\}, i = 1,2,...,N$ is established for different frequencies according to formula (9). A new compensation function $D_b(x, w)$ of the viscous medium is obtained according to Formula (10), and $T^P$ is still computed by Formula (5).

Step 8, Fourier transform is performed on a seismic record at a receiver point in step 5 to obtain a seismic record $D_{obs}(x, w)$ in a frequency domain; Frequency division compensation is performed on the seismic record in the frequency domain based on the total attenuation time T* obtained in step 6 and the new compensation function $D_b(x, w)$ of the viscous medium to obtain the compensated seismic data $D_{flt}(x, w)$. Step 9, prestack depth migration is performed on the compensated seismic data $D_{flt}(x, w)$ to implement migration imaging of a viscous medium of a seismic trace of a current receiver point.

Step 10, overall seismic records obtained in step 1 are processed through steps 3-9, and imaging results are accumulated to obtain a final viscous medium migration imaging section.

According to this example, the problem of compensation for absorption attenuation in an area with a small Q value is effectively solved. This method is simple and practical, and can effectively compensate for a high-frequency component of the seismic wave. After compensation, a main frequency of the seismic imaging section is increased by 4 Hz or more, and stability and effectiveness of a compensation algorithm for the area with the small Q value such as a gas cloud area are balanced.

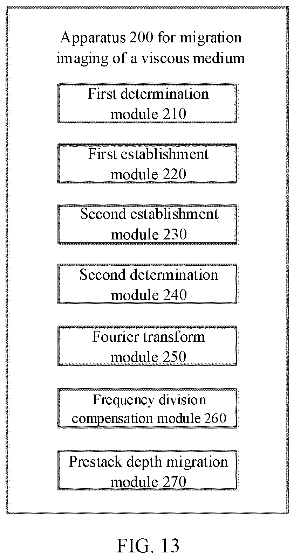

In an example, as shown in FIG. 13, an apparatus for migration imaging of a viscous medium is provided. The apparatus includes a first determination module 210, a first establishment module 220, a second establishment module 230, a second determination module 240, a Fourier transform module 250, a frequency division compensation module 260, and a prestack depth migration module 270. The modules are as follows:

the first determination module 210 is used to determine total attenuation time T* and a phase compensation function of a seismic wave in the viscous medium;

the first establishment module 220 is used to establish an amplitude compensation function related to absorption attenuation based on the total attenuation time T*;

the second establishment module 230 is used to add gain control to the amplitude compensation function to establish an amplitude compensation function having the gain control;

the second determination module 240 is used to determine a new compensation function of the viscous medium based on the phase compensation function of the seismic wave in the viscous medium and the established amplitude compensation function;

the Fourier transform module 250 is used to perform Fourier transform on a seismic record of a receiver point of the seismic wave in the viscous medium to obtain a seismic record in a frequency domain;

the frequency division compensation module 260 is used to perform frequency division compensation on the seismic record in the frequency domain based on the new compensation function of the viscous medium to obtain compensated seismic data; and the prestack depth migration module 270 is used to perform prestack depth migration on the compensated seismic data to obtain a migration imaging section of the viscous medium.

The apparatus for migration imaging of a viscous medium includes a processor and a memory. The first determination module 210, the first establishment module 220, the second establishment module 230, the second determination module 240, the Fourier transform module 250, the frequency division compensation module 260 and the prestack depth migration module 270 are all stored in the memory as program units, and the processor executes the program modules stored in the memory to implement corresponding functions.

The processor contains a core, and the core invokes a corresponding program unit in the memory. One or more cores may be set, and the method for migration imaging of a viscous medium may be implemented by adjusting parameters of the cores.

The memory may include a non-permanent memory, a random access memory (RAM) and/or a nonvolatile memory such as a read-only memory (ROM) or a flash RAM in the computer readable medium, and the memory includes at least one storage chip.

The example of the disclosure provides a storage medium. The storage medium stores a program, and the program implements the method for migration imaging of a viscous medium when executed by a processor.

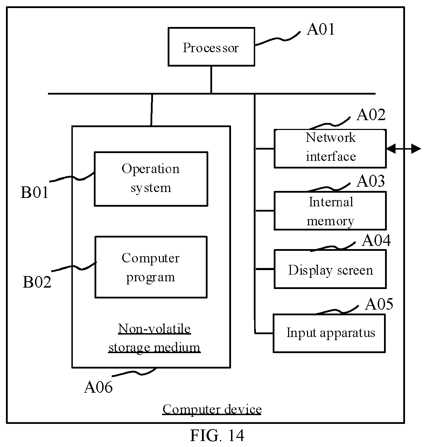

In an example, a computer device is provided. The computer device may be a terminal, and its internal structure diagram may be shown in FIG. 14. The computer device includes a processor A01, a network interface A02, a display screen A04, an input apparatus A05 and a memory (not shown in the figure) that are connected through a system bus. The processor A01 of the computer device is used to provide computing and control capacities. The memory of the computer device includes an internal memory A03 and a nonvolatile storage medium A06. The nonvolatile storage medium A06 stores an operation system B01 and a computer program B02. The internal memory A03 provides an environment for operation of the operation system B01 and the computer program B02 in the nonvolatile storage medium A06. The network interface A02 of the computer device is used to communicate with an external terminal through networking. The computer program implements the method for migration imaging of a viscous medium when executed by the processor A01. The display screen A04 of the computer device may be a liquid crystal display screen or an electronic ink display screen. The input apparatus A05 of the computer device may be a touch layer covering the display screen, or may be a button, a trackball or a touch pad arranged on a shell of the computer device, or may be an external keyboard, a touch pad or a mouse.

It can be understood by those skilled in the art that the structure shown in FIG. 14 is merely a block diagram of some structure related to the solution of the disclosure, and does not constitute limitation to the computer device to which the solution of the disclosure is applied. The specific computer device may include more or less components than those shown in the figure, or combine some components, or have different component arrangements.

In an example, the apparatus for migration imaging of a viscous medium according to the disclosure may be implemented as a computer program. The computer program may be run on the computer device shown in FIG. 14. In an example, the program modules making up the apparatus for migration imaging of a viscous medium, such as the first determination module 210, the first establishment module 220, the second establishment module 230, the second determination module 240, the Fourier transform module 250, the frequency division compensation module 260, and the prestack depth migration module 270 shown in FIG. 13 may be stored on the memory of the computer device. The computer program composed of the program modules causes the processor to execute steps in the method for migration imaging of a viscous medium of the examples of the disclosure described in this description.

The computer device shown in FIG. 14 may execute step S110 through the first determination module 210 in the apparatus for migration imaging of a viscous medium shown in FIG. 13. The computer device may execute step S120 through the first establishment module 220. The computer device may execute step S130 through the second establishment module 230. The computer device may execute step S140 through the second determination module 240. The computer device may execute step S150 through the Fourier transform module 250. The computer device may execute step S160 through the frequency division compensation module 260. The computer device may execute step S170 through the prestack depth migration module 270.

The example of the disclosure provides a device. The device includes a processor, a memory, and a program that is stored on the memory and runnable on the processor. When executing the program, the processor implements steps as follows:

Step S110, determining total attenuation time $T^*$ and a phase compensation function of a seismic wave in the viscous medium.

Step S120, establishing an amplitude compensation function related to absorption attenuation based on the total attenuation time $T^*$.

Step S130, adding gain control to the amplitude compensation function to establish an amplitude compensation function having the gain control.

Step S140, determining a new compensation function of the viscous medium based on the phase compensation function of the seismic wave in the viscous medium and the established amplitude compensation function.

Step S150, performing Fourier transform on a seismic record of a receiver point of the seismic wave in the viscous medium to obtain a seismic record in a frequency domain.

Step S160, performing frequency division compensation on the seismic record in the frequency domain based on the new compensation function of the viscous medium to obtain compensated seismic data.

Step S170, performing prestack depth migration on the compensated seismic data to obtain a migration imaging section of the viscous medium.

In an example, the step that total attenuation time $T^*$ and a phase compensation function of a seismic wave in the viscous medium are obtained includes:

seismic records in the form of shot gather in the time domain that are conventionally processed are obtained;
a depth domain velocity model and an absorption attenuation Q model are established based on the seismic records in the form of shot gather in the time domain;

attenuation time $T_s^*$ of the shot point is obtained for seismic record of each shot at coordinates of a shot point based on the depth domain velocity model and the absorption attenuation Q model through ray tracing of the shot point considering the absorption attenuation;

attenuation time $T_r^*$ of the receiver point is obtained for each receiver point through ray tracing of the receiver point considering the absorption attenuation; and the total attenuation time $T^*$ is obtained by adding the attenuation time $T_s^*$ of the shot point and the attenuation time $T_r^*$ of the receiver point together.

In an example, the step that a phase compensation function of a seismic wave in the viscous medium is obtained includes:
the phase compensation function of the seismic wave in the viscous medium is determined according to Formula (3):

$$D_a(x, w) = exp\left[iw\left(-\frac{i}{2}T^* - \frac{1}{\pi}T^* ln(w/w_0)\right)\right]; \qquad (3)$$

Formula (3) is simplified and expressed as follows:

$$D_a(x, w) = A exp\left[iwT^p\right]; \qquad (4)$$

$$A = exp\left(\frac{w}{2}T^*\right), \quad T^p = -\frac{1}{\pi}T^* ln(w/w_0); \qquad (5)$$

In the formula, $D_a(x, w)$ denotes a compensation factor of the seismic wave, x denotes a spatial position, w denotes a circular frequency of the seismic wave, $i$ denotes an imaginary unit, $\pi$ denotes a ratio of circumference to diameter, $w_0$ denotes a reference circular frequency, $T^*$ denotes the total attenuation time, $exp[iwT^p]$ denotes the phase compensation function, A denotes the amplitude compensation function of the seismic wave, and $T^p$ denotes a phase compensation factor of the seismic wave.

In an example, the step that an amplitude compensation function related to absorption attenuation is established based on the total attenuation time T* includes:
the amplitude compensation function $\{D(i)\}$, i = 1,2,..., N related to the absorption attenuation is established based on the total attenuation time T* according to Formulas (7)-(8);

$$D(1) = 1; \qquad (7)$$

$$D(i+1) = D(i) + exp\left[-\left((f_{i+1} - f_{ctl})/T_{scl}\right)^2/2\right], \quad i = 1,2,...,N; \qquad (8)$$

In the formula, $f_{ctl}$ denotes a control frequency, and $f_{i+1}$ denotes a frequency sequence; and $T_{scl} = C_1 * T^*$, in the formula, $C_1$ denotes a user-controllable scale factor, and $T^*$ denotes the total attenuation time.

In an example, the steps that gain control is added to the amplitude compensation function, and an amplitude compensation function having the gain control is established include:
let the gain control as $d_{scl} = db_{in}/C_2$, in the formula, $C_2$ denotes a user-controllable scale factor, and $db_{in}$ denotes a user-controllable compensation decibel, and an amplitude absorption compensation function $\{D_{new}(i)\}$, i = 1,2,...,N is established for different frequencies according to Formula (9):

$$D_{new}(i) = D(i)^{d_{scl}}, \quad i = 1,2,...,N; \qquad (9)$$

In the formula, $D_{new}(i)$ denotes the amplitude compensation function having the gain control, D(i) denotes the amplitude compensation function, $d_{scl}$ denotes the gain control, and N denotes a number of frequencies of a seismic signal.

In an example, the step that a new compensation function of the viscous medium is determined based on the phase compensation function of the seismic wave in the viscous medium and the established amplitude compensation function includes:
the new compensation function of the viscous medium is determined based on the phase compensation function of the seismic wave in the viscous medium and the established amplitude compensation function according to Formula (10);

$$D_b(x, w) = D_{new} exp[iwT^P]; \qquad (10)$$

In the formula, $D_b(x, w)$ denotes the new compensation function of the viscous medium, $D_{new}$ denotes the amplitude compensation function, w denotes the circular frequency of the seismic wave, $i$ denotes the imaginary unit, $exp[iwT^p]$ denotes the phase compensation function, and $T^P$ is still computed by Formula (5).

In an example, the steps that frequency division compensation is performed on the seismic record in the frequency domain based on the new compensation function of the viscous medium to obtain compensated seismic data includes:
the frequency division compensation is performed on the seismic record in the frequency domain based on the new compensation function of the viscous medium according to Formula (11) to obtain the compensated seismic data;

$$D_{flt}(x, w) = D_b(x, w) * D_{obs}(x, w),$$
(11)

In the formula, $D_{flt}(x, w)$ denotes the compensated seismic data, $D_b(x, w)$ denotes the new compensation functio of the viscous medium n, and $D_{obs}(x, w)$ denotes the seismic record in the frequency domain.

A person of ordinary skill in the art should understand that the examples of the disclosure may be provided as a method, a system, or a computer program product. Thus, the disclosure may take the form of an entire hardware example, an entire software example, or an example combining software and hardware. Moreover, the disclosure may take the form of a computer program product implemented on one or more computer usable storage media (including but not limited to disk memories, compact disc read-only memories (CD-ROMs), and optical memories) including computer usable program codes.

The examples described above are merely examples of the disclosure, and are not used to limit the disclosure. For those skilled in the art, various modifications and changes can be made to the disclosure. Any modification, equivalent substitution, improvement, etc. made within the spirit and principles of the disclosure should fall within the protection scope of the claims of the disclosure.

## Claims

1. A method for migration imaging of a viscous medium, comprising:

   determining total attenuation time $T^*$ and a phase compensation function of a seismic wave in the viscous medium;
   establishing an amplitude compensation function related to absorption attenuation based on the total attenuation time $T^*$;
   adding gain control to the amplitude compensation function to establish an amplitude compensation function having the gain control;
   determining a new compensation function of the viscous medium based on the phase compensation function of the seismic wave in the viscous medium and the established amplitude compensation function;
   performing Fourier transform on a seismic record of a receiver point of the seismic wave in the viscous medium to obtain a seismic record in a frequency domain;
   performing frequency division compensation on the seismic record in the frequency domain based on the new compensation function of the viscous medium to obtain compensated seismic data; and
   performing prestack depth migration on the compensated seismic data to obtain a migration imaging section of the viscous medium.

2. The method according to claim 1, wherein the determining total attenuation time $T^*$ of a seismic wave in the viscous medium comprises:

   obtaining seismic records in the form of shot gather in a time domain that are conventionally processed;
   establishing a velocity model in a depth domain and an absorption attenuation Q model based on the seismic records in the form of shot gather in the time domain;
   obtaining, for seismic record of each shot at coordinates of a shot point based on the velocity model in the depth domain and the absorption attenuation Q model, attenuation time $T_s^*$ of the shot point through ray tracing of the shot point considering the absorption attenuation;
   obtaining, for each receiver point, attenuation time $T_r^*$ of the receiver point through ray tracing of the receiver point considering the absorption attenuation; and
   obtaining the total attenuation time $T^*$ by adding the attenuation time $T_s^*$ of the shot point and the attenuation time $T_r^*$ of the receiver point together.

3. The method according to claim 2, wherein the determining a phase compensation function of a seismic wave in the viscous medium comprises:

   determining the phase compensation function of the seismic wave in the viscous medium according to Formula (3):

$$D_a(x, w) = exp\left[iw(-\frac{i}{2}T^* - \frac{1}{\pi}T^*ln(w/w_0))\right]; \qquad (3)$$

simplifying and expressing Formula (3) as follows:

$$D_a(x, w) = Aexp\left[iwT^p\right]; \qquad (4)$$

$$A = exp\left(\frac{w}{2}T^*\right), \quad T^p = -\frac{1}{\pi}T^*ln(w/w_0); \qquad (5)$$

wherein $D_a(x, w)$ denotes a compensation factor of the seismic wave, $x$ denotes a spatial position, $w$ denotes a circular frequency of the seismic wave, $i$ denotes an imaginary unit, $\pi$ denotes a ratio of circumference to diameter, $w_0$ denotes a reference circular frequency, $T^*$ denotes the total attenuation time, $exp\left[iwT^p\right]$ denotes the phase compensation function, A denotes the amplitude compensation function of the seismic wave, and $T^p$ denotes a phase compensation factor of the seismic wave.

4. The method according to claim 3, wherein the establishing an amplitude compensation function related to absorption attenuation based on the total attenuation time T*comprises:

establishing the amplitude compensation function $\{D(i)\}$, $i = 1,2,..., N$ related to the absorption attenuation based on the total attenuation time T* according to Formulas (7)-(8):

$$D(1) = 1; \qquad (7)$$

$$D(i+1) = D(i) + exp\left[-((f_{i+1} - f_{ctl})/T_{scl})^2/2\right] \quad i = 1,2,...,N; \qquad (8)$$

wherein $f_{ctl}$ denotes a control frequency, and $f_{i+1}$ denotes a frequency sequence; and $T_{scl} = C_1*T^*$, wherein $C_1$ denotes a user-controllable scale factor, and $T^*$ denotes the total attenuation time.

5. The method according to claim 4, wherein the adding gain control to the amplitude compensation function to establish an amplitude compensation function having the gain control comprises:

determining the gain control as $d_{scl} = db_{in}/C_2$, wherein $C_2$ denotes a user-controllable scale factor, and $db_{in}$ denotes a user-controllable compensation decibel; and establishing an amplitude absorption compensation function $\{D_{new}(i)\}$, $i = 1,2,...,N$ for different frequencies according to Formula (9):

$$D_{new}(i) = D(i)^{d_{scl}}, \quad i = 1,2,...,N; \qquad (9)$$

wherein $D_{new}(i)$ denotes the amplitude compensation function having the gain control, D(i) denotes the amplitude compensation function, $d_{scl}$ denotes the gain control, and N denotes a number of frequencies of a seismic signal.

6. The method according to claim 5, wherein the determining a new compensation function of the viscous medium based on the phase compensation function of the seismic wave in the viscous medium and the established amplitude compensation function comprises:

determining the new compensation function of the viscous medium based on the phase compensation function of the seismic wave in the viscous medium and the established amplitude compensation function according to Formula (10);

$$D_b(x, w) = D_{new}\,exp[iwT^P]; \qquad (10)$$

wherein $D_b(x, w)$ denotes the new compensation function of the viscous medium, $D_{new}$ denotes the amplitude compensation function, w denotes the circular frequency of the seismic wave, $i$ denotes the imaginary unit, $exp$

[*iwT<sup>p</sup>*] denotes the phase compensation function, and $T^P$ is computed by Formula (5).

7. The method according to claim 6, wherein the performing frequency division compensation on the seismic record in the frequency domain based on the new compensation function of the viscous medium to obtain compensated seismic data comprises:

performing the frequency division compensation on the seismic record in the frequency domain based on the new compensation function of the viscous medium according to Formula (11) to obtain the compensated seismic data;

$$D_{flt}(x, w) = D_b(x, w) * D_{obs}(x, w)_{;} \qquad (11)$$

wherein $D_{flt}(x, w)$ denotes the compensated seismic data, $D_b(x, w)$ denotes the new compensation function of the viscous medium, and $D_{obs}(x, w)$ denotes the seismic record in the frequency domain.

8. An apparatus for migration imaging of a viscous medium, comprising:

a first determination module used to determine total attenuation time T* and a phase compensation function of a seismic wave in the viscous medium;
a first establishment module used to establish an amplitude compensation function related to absorption attenuation based on the total attenuation time $T^*$;
a second establishment module used to add gain control to the amplitude compensation function to establish an amplitude compensation function having the gain control;
a second determination module used to determine a new compensation function of the viscous medium based on the phase compensation function of the seismic wave in the viscous medium and the established amplitude compensation function;
a Fourier transform module used to perform Fourier transform on a seismic record of a receiver point of the seismic wave in the viscous medium to obtain a seismic record in a frequency domain;
a frequency division compensation module used to perform frequency division compensation on the seismic record in the frequency domain based on the new compensation function of the viscous medium to obtain compensated seismic data; and
a prestack depth migration module used to perform prestack depth migration on the compensated seismic data to obtain a migration imaging section of the viscous medium.

9. A processor, configured to execute the method for migration imaging of a viscous medium according to any one of claims 1 to 7.

10. A machine-readable storage medium, storing instructions, wherein the instructions cause a processor to be configured to execute the method for migration imaging of a viscous medium according to any one of claims 1 to 7 when executed by the processor.

102

104

Network

FIG. 1

Determining total attenuation time and a phase compensation function of a seismic wave in a viscous medium ⟋ S110

Establishing an amplitude compensation function related to absorption attenuation based on the total attenuation time ⟋ S120

Adding gain control to the amplitude compensation function to establish an amplitude compensation function having the gain control ⟋ S130

Determining a new compensation function of viscous medium based on the phase compensation function of the seismic wave in the viscous medium and the established amplitude compensation function ⟋ S140

Performing Fourier transform on a seismic record of a receiver point of the seismic wave in the viscous medium to obtain a seismic record in a frequency domain ⟋ S150

Performing frequency division compensation on the seismic record in the frequency domain based on the new compensation function of the viscous medium to obtain compensated seismic data ⟋ S160

Performing prestack depth migration on the compensated seismic data to obtain a migration imaging section of the viscous medium ⟋ S170

FIG. 2

FIG. 3

..... Theoretical compensation function

---- Gain truncation function

········ Gain damping function

FIG. 4

FIG. 5

FIG. 6

FIG. 7

FIG. 8

FIG. 9

FIG. 10

FIG. 11

FIG. 12

Apparatus 200 for migration
imaging of a viscous medium

First determination
module 210

First establishment
module 220

Second establishment
module 230

Second determination
module 240

Fourier transform
module 250

Frequency division
compensation module 260

Prestack depth migration
module 270

FIG. 13

FIG. 14

## INTERNATIONAL SEARCH REPORT

| International application No. |
|---|
| **PCT/CN2023/137357** |

**A. CLASSIFICATION OF SUBJECT MATTER**

G01V 1/28(2006.01)i; G01V 1/30(2006.01)i

According to International Patent Classification (IPC) or to both national classification and IPC

**B. FIELDS SEARCHED**

Minimum documentation searched (classification system followed by classification symbols)

IPC:G01V1

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 地震, 粘滞, 粘弹, 偏移, 成像, 衰减走时, 相位补偿, 振幅补偿, 增益控制, 频率域, 频域, 分频补偿, 叠前深度偏移, seismic, viscous, migration, imaging, attenuation, phase, amplitude, compensation, gain control, frequency domain, frequency division, prestack depth migration

**C. DOCUMENTS CONSIDERED TO BE RELEVANT**

| Category* | Citation of document, with indication, where appropriate, of the relevant passages | Relevant to claim No. |
|---|---|---|
| A | CN 108919356 A (CHINA UNIVERSITY OF PETROLEUM (EAST CHINA)) 30 November 2018 (2018-11-30)<br>entire document | 1-10 |
| A | CN 102590862 A (INSTITUTE OF GEOLOGY AND GEOPHYSICS, CHINESE ACADEMY OF SCIENCES) 18 July 2012 (2012-07-18)<br>entire document | 1-10 |
| A | CN 105510973 A (CHINA PETROCHEMICAL CO., LTD. et al.) 20 April 2016 (2016-04-20)<br>entire document | 1-10 |
| A | CN 113009569 A (CHINA NATIONAL PETROLEUM CORPORATION et al.) 22 June 2021 (2021-06-22)<br>entire document | 1-10 |
| A | US 2016291184 A1 (SCHLUMBERGER TECHNOLOGY CORPORATION) 06 October 2016 (2016-10-06)<br>entire document | 1-10 |

☑ Further documents are listed in the continuation of Box C. ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2024** | **08 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/137357**

### C.    DOCUMENTS CONSIDERED TO BE RELEVANT

| Category* | Citation of document, with indication, where appropriate, of the relevant passages | Relevant to claim No. |
|---|---|---|
| A | US 2017371050 A1 (SUN, J. et al.) 28 December 2017 (2017-12-28)<br>entire document | 1-10 |
| A | US 2019302296 A1 (AHARCHAOU, M. et al.) 03 October 2019 (2019-10-03)<br>entire document | 1-10 |

Form PCT/ISA/210 (second sheet) (July 2022)

**INTERNATIONAL SEARCH REPORT**
Information on patent family members

International application No.

**PCT/CN2023/137357**

| Patent document cited in search report | | | Publication date (day/month/year) | Patent family member(s) | | | Publication date (day/month/year) |
|---|---|---|---|---|---|---|---|
| CN | 108919356 | A | 30 November 2018 | None | | | |
| CN | 102590862 | A | 18 July 2012 | None | | | |
| CN | 105510973 | A | 20 April 2016 | None | | | |
| CN | 113009569 | A | 22 June 2021 | None | | | |
| US | 2016291184 | A1 | 06 October 2016 | WO | 2016161096 | A1 | 06 October 2016 |
| | | | | US | 9784867 | B2 | 10 October 2017 |
| US | 2017371050 | A1 | 28 December 2017 | US | 10620331 | B2 | 14 April 2020 |
| | | | | WO | 2018004789 | A1 | 04 January 2018 |
| US | 2019302296 | A1 | 03 October 2019 | US | 11294087 | B2 | 05 April 2022 |

Form PCT/ISA/210 (patent family annex) (July 2022)